# EUROPÄISCHE PATENTANMELDUNG

(11) **EP 3 473 772 A1**
(43) Veröffentlichungstag der Anmeldung: **24.04.2019**
(21) Anmeldenummer: 17197348.0
(22) Anmeldetag: 19.10.2017
(51) Int. Cl.: E01H 5/04, G05D 1/02, B60W 30/165

(54) **RÄUMFAHRZEUGGRUPPE MIT FAHRASSISTENZVORRICHTUNG**

(71) Anmelder: Marcel Boschung AG, 1530 Payerne (CH)
(72) Erfinder: Ganz, Stefan, 3095 Spiegel b. Bern (CH)
(74) Vertreter: Schalch, Rainer

(57) **Zusammenfassung**

Eine Fahrzeuggruppe umfasst ein erstes Räumfahrzeug (1) und ein zweites Räumfahrzeug (2), wobei das zweite Räumfahrzeug (2) eine Fahrassistenzvorrichtung zum Assistieren eines Fahrzeugführers des zweiten Räumfahrzeuges (2) aufweist. Die Fahrassistenzvorrichtung weist einen Räumungsmodus auf, und ist ausgestaltet zum Assistieren, um mit dem zweiten Räumfahrzeug (2) dem ersten Räumfahrzeug (1) mit einem bestimmten Längsabstand (11) zu folgen und um dem ersten Räumfahrzeug (1) im Räumungsmodus mit einem bestimmten Seitenabstand (12) seitlich versetzt zu folgen.

## Beschreibung

### Gebiet der Erfindung

Die Erfindung betrifft eine Fahrzeuggruppe, umfassend ein erstes Räumfahrzeug, insbesondere ein erstes Schneeräumfahrzeug, und ein zweites Räumfahrzeug, insbesondere ein zweites Schneeräumfahrzeug, wobei das zweite Räumfahrzeug eine Fahrassistenzvorrichtung zum Assistieren eines Fahrzeugführers des zweiten Räumfahrzeuges aufweist. Ferner betrifft die Erfindung ein Verfahren gemäss Oberbegriff des Anspruchs 13.

### Hintergrund

Um Fahrflächen eines Flughafens, insbesondere die Start- und die Landebahn, bei Schneefall während des Betriebs effizient räumen zu können, bilden mehrere Schneeräumfahrzeuge eine Fahrzeuggruppe und räumen aufeinander abgestimmt als Konvoi die Bodenflächen des Flughafens. Aus Zeit- und Sicherheitsgründen sollten Räumfahrten auf dem Flughafen so kurz wie möglich gehalten werden. Hohe Geschwindigkeiten, dichtes Hinter- und Nebeneinanderfahren können insbesondere bei schlechten Sichtbedingungen zu einem erheblichen Sicherheitsrisiko für die einzelnen Fahrzeuge und das Flughafenpersonal führen. Im Weiteren kann das Arbeiten unter Zeitdruck zu einer unsauberen Räumung führen, was auch ein Risiko für die Flugzeuge und die Betriebsfahrzeuge des Flughafens darstellen kann.

### Darstellung der Erfindung

Der Erfindung liegt die Aufgabe zu Grunde, eine Fahrzeuggruppe bereitzustellen, mit welcher Bodenflächen effizienter und effektiver räumbar sind.

Diese Aufgabe wir gemäss dem unabhängigen Vorrichtungsanspruch gelöst.

Demgemäss umfasst eine Fahrzeuggruppe ein erstes Räumfahrzeug, insbesondere ein erstes Schneeräumfahrzeug, und ein zweites Räumfahrzeug, insbesondere ein zweites Schneeräumfahrzeug. Das zweite Räumfahrzeug weist eine Fahrassistenzvorrichtung zum Assistieren eines Fahrzeugführers des zweiten Räumfahrzeuges auf. Die Fahrassistenzvorrichtung weist einen Räumungsmodus auf, und ist ausgestaltet zum Assistieren, um mit dem zweiten Räumfahrzeug dem ersten Räumfahrzeug mit einem bestimmten Längsabstand zu folgen und um dem ersten Räumfahrzeug im Räumungsmodus mit einem bestimmten Seitenabstand seitlich versetzt zu folgen.

Unter "seitlich versetzt" ist zu verstehen, dass zwei Fahrzeuge nicht in der exakt gleichen Spur fahren, d.h. der bestimmte Seitenabstand ist grösser Null.

Eine Fahrassistenzvorrichtung ermöglicht dem Fahrzeugführer eine Fahrt mit mehr Sicherheit und führt auch zu einem besseren Räumergebnis, weil er durch das Fahrassistenzsystem in seiner Wahrnehmung und/oder Steuerung des Fahrzeuges unterstützt wird.

Mit Vorteil ist der bestimmte Seitenabstand kleiner als eine Pflugbreite des ersten Räumfahrzeuges. Insbesondere ist der bestimmte Seitenabstand um weniger als 100 cm, insbesondere um weniger als 60 cm, insbesondere um weniger als 40 cm kleiner als die Pflugbreite des ersten Räumfahrzeuges.

In einer besonderen Ausführungsform ist der bestimmte Seitenabstand kleiner, insbesondere um 100 cm, insbesondere um 60 cm, insbesondere um 40 cm kleiner, als eine Summe aus einer Hälfte einer Pflugbreite eines ersten Pfluges des ersten Räumfahrzeuges, und einer Hälfte einer Pflugbreite eines zweiten Pfluges des zweiten Räumfahrzeuges.

Mit "der Pflugbreite" ist diejenige Breite gemeint, welche mit dem Pflug geräumt werden kann. Wird der Pflug beispielsweise schräg gestellt, so verringert sich die Breite der Bodenfläche, welche geräumt werden kann. Somit verringert sich nach dem vorliegenden Verständnis auch die Pflugbreite.

Der genannte bestimmte Seitenabstand führt dazu, dass die Räumfahrzeuge mit möglichst geringer gegenseitiger Überlappung der Pflüge fahren, sodass nur eine sehr kleine Bodenfläche mit zwei Pflügen überfahren wird. Somit kann mit möglichst wenigen Fahrzeugen eine möglichst grosse Breite der Bodenfläche geräumt werden. Durch die Fahrassistenzvorrichtung wird ein präzises seitlich versetztes Fahren ermöglicht, sodass auch bei einer kleinen Überlappung sichergestellt werden kann, dass die Bodenfläche sauber geräumt wird.

Mit Vorteil weist die Fahrzeuggruppe eine Positionsmessvorrichtung zur Messung des Längsabstands und des Seitenabstands zwischen aufeinander folgenden Fahrzeugen auf.

Mit der Messvorrichtung wird ermöglicht, dass der Fahrzeugführer oder eine Steuerung des Fahrzeuges mit Daten zum Abstand zu den anderen Räumfahrzeugen bedient wird. Dies ermöglicht eine präzise Abstandshaltung zwischen den einzelnen Räumfahrzeugen.

Im Weiteren kann das zweite Räumfahrzeug ein Ausgabegerät aufweisen, welches dazu ausgestaltet ist, Abweichungen des gemessenen Längsabstands vom bestimmten Längsabstand und Abweichungen des gemessenen Seitenabstands vom bestimmten Seitenabstand auszugeben, und/oder das zweite Räumfahrzeug kann eine Fahrregelung aufweisen, welche ausgestaltet ist, das zweite Räumfahrzeug zu steuern, derart, dass der gemessene Längsabstand mit dem bestimmten Längsabstand und der gemessene Seitenabstand mit dem bestimmten Seitenabstand kontinuierlich innerhalb einer bestimmten Toleranz übereinstimmt.

Durch die Berechnung und Anzeige von Abweichungen verfügt der Fahrer des Räumfahrzeuges über eine Fahrhilfe, mit welcher er das Räumfahrzeug präzise Steuern kann. Der Seitenabstand und der Längsabstand können somit auch bei hohen Geschwindigkeiten und bei schlechter Sicht eingehalten werden. Verfügt das Fahrzeug über eine Fahrregelung, so wird der Fahrer zusätzlich entlastet, weil die Fahrregelung die berechneten Abweichungen stetig korrigiert.

Mit Vorteil ist die Positionsmessvorrichtung eine Real Time Kinematic Messvorrichtung.

Dabei handelt es sich um eine Vorrichtung zum präzisen Bestimmen von Positionskoordination mit Methoden der Satellitennavigation. Ein solches System ist dem Fachmann bekannt. Diese Art von Positionsmessvorrichtung hat den Vorteil, dass die Fahrzeuge alleine anhand der Positionskoordinaten gesteuert werden können. Es ist somit nicht erforderlich, dass die Räumfahrzeuge über Pläne des Flughafens verfügen müssen, um den Flughafen zu räumen.

In einer bevorzugten Ausführungsform weist die Fahrassistenzvorrichtung einen Transfermodus auf und ist ausgestaltet, zum Assistieren, um dem ersten Räumfahrzeug im Transfermodus ohne seitliche Versetzung, insbesondere innerhalb eines bestimmten Toleranzbereiches, mit dem bestimmten Längsabstand zu folgen.

Fahren die Räumfahrzeuge als Konvoi von ihrem Abstellplatz zu der zu räumenden Bodenfläche, so sollten die Räumfahrzeuge möglichst dicht hintereinander fahren und sich erst seitlich versetzt zueinander positionieren, sobald die zu räumende Bodenfläche erreicht wurde. Somit ist es ein Vorteil, wenn der Fahrer auch im Transfermodus beim Hintereinanderfahren von der Fahrassistenzvorrichtung unterstützt wird.

Im Weiteren kann die Fahrzeuggruppe eine Kommunikationsvorrichtung aufweisen,
- welche derart ausgestaltet ist, dass unter den Räumfahrzeugen direkt miteinander Positionsdaten austauschbar sind, und/oder
- wobei ausgehend von einem Fahrzeug der Fahrzeuggruppe, insbesondere von einem der Räumfahrzeuge, den übrigen Räumfahrzeugen mittels der Kommunikationsvorrichtung ein Beginn und/oder ein Ende des Räummodus und/oder des Transfermodus kommunizierbar ist.

Durch den Austausch der Positionsdaten können die einzelnen Fahrassistenzvorrichtungen die Abstände und somit die Abweichungen der gemessenen zu den bestimmten Abständen berechnen.

Mit Vorteil kann das erste Räumfahrzeug eine Linienfolgeregelung aufweisen, welche derart ausgestaltet ist, dass das erste Räumfahrzeug automatisch einer auf der befahrenen Fläche vorhandenen Linie folgt.

Dies ermöglicht, dass dasjenige Räumfahrzeug, welches bevorzugt an der Spitze des Konvois und/oder in der Mitte der zu räumenden Bodenfläche fährt, in der beabsichtigten Spur bleibt, so dass die folgenden Fahrzeuge die zu räumenden Bodenfläche vollständig räumen können.

Vorteilhaft kann die Fahrzeuggruppe eine Sensorik zur Feststellung der witterungsbedingten Sichtweite aufweisen, und die Fahrassistenzvorrichtung kann ausgestaltet sein, unter Berücksichtigung der festgestellten witterungsbedingten Sichtweite den Längsabstand und/oder eine Fahrgeschwindigkeit zu bestimmen.

Dieses System ermöglicht, beispielsweise bei schlechter Witterung den Längsabstand zu vergrössern, sodass bei einer Fehlfunktion der Fahrassistenzvorrichtung der Fahrer das Fahrzeug aufgrund des grösseren Längsabstands dennoch sicher führen kann.

In einer besonderen Ausführungsform umfasst die Fahrzeuggruppe und ein drittes Räumfahrzeug und gegebenenfalls weitere Räumfahrzeuge mit einer weiteren Fahrassistenzvorrichtung zum Assistieren eines Fahrzeugführers des dritten Räumfahrzeuges bzw. der Fahrzeugführer der weiteren Räumfahrzeuge, wobei die weitere Fahrassistenzvorrichtung des dritten Räumfahrzeuges bzw. der weiteren Räumfahrzeuge einen Räumungsmodus aufweist, und ausgestaltet ist zum Assistieren, um mit dem zweiten Räumfahrzeug in einem bestimmten Längsabstand und in einem bestimmten Seitenabstand seitlich versetzt dem zweiten Räumfahrzeug zu folgen bzw. um mit den weiteren Räumfahrzeugen dem jeweils vorangehenden Räumfahrzeug in einem bestimmten Längsabstand (11) und in einem bestimmten Seitenabstand (12) seitlich versetzt zu folgen.

Der Erfindung liegt weiter die Aufgabe zu Grunde ein verbessertes Verfahren zur Schneeräumung auf Flugplätzen zu schaffen.

Dies wird durch das Verfahren gemäss Anspruch 13 erzielt. Damit ergeben sich die vorstehend genannten Vorteile. Bevorzugte Ausführungen des Verfahrens erfolgen gemäss den Ansprüchen 14 und 15.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Fahrzeuggruppe mit sieben Räumfahrzeugen beim Räumen einer Start- und Landebahn eines Flugplatzes;
Fig. 2 eine Fahrzeuggruppe mit sieben Räumfahrzeugen und einer Schneefräse beim Räumen einer Start-und Landebahn eines Flugplatzes;
Fig. 3 eine Fahrzeuggruppe im Transfermodus beim Transferieren auf dem Flughafen;
Fig. 4 eine schematische Darstellung der Abstandsmessung zwischen zwei Räumfahrzeugen mit identischer Pflugbreite;
Fig. 5 eine schematische Darstellung der Abstandsmessung zwischen zwei Räumfahrzeugen mit ungleicher Pflugbreite; und
Fig. 6 eine schematische Darstellung von zwei Räumfahrzeugen mit einer Fahrassistenzvorrichtung.

### Weg zur Ausführung der Erfindung

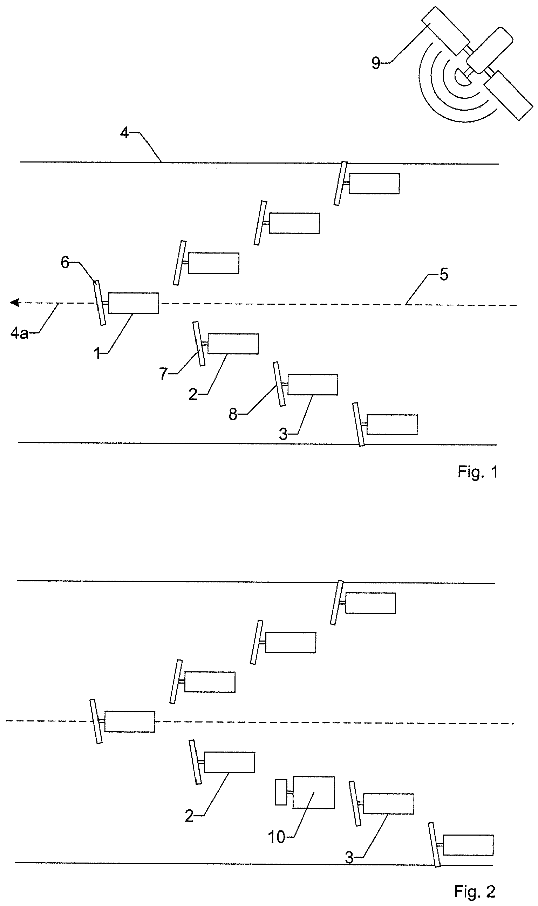

In Fig. 1 ist eine Fahrzeuggruppe mit einem ersten Räumfahrzeug 1, einem zweiten Räumfahrzeug 2, einem dritten Räumfahrzeug 3 und vier weiteren Räumfahrzeugen schematisch mit Sicht von oben dargestellt. Die Fahrzeuggruppe räumt eine Start- und Landebahn 4 eines Flugplatzes und befindet sich im Räummodus. Die Räumfahrzeuge bewegen sich aufeinander abgestimmt im Konvoi in Pfeilrichtung 4a. Das erste Räumfahrzeug 1 fährt an der Spitze der Fahrzeuggruppe und folgt einer auf der Start- und Landebahn eingezeichneten Mittellinie 5. Das zweite Räumfahrzeug 2, das dritte Räumfahrzeug 3 und die weiteren Räumfahrzeuge folgen hinter dem ersten Räumfahrzeug 1 seitlich versetzt. Die Räumfahrzeuge sind derart seitlich versetzt, dass mit den insgesamt sieben Räumfahrzeugen die gesamte Breite der Start- und Landebahn 4 mit einer einzigen Durchfahrt geräumt wird.

Alle Räumfahrzeuge weisen einen Pflug auf, wobei der Pflug des ersten Räumfahrzeuges 1 als erster Pflug 6, der Pflug des zweiten Räumfahrzeuges 2 als zweiter Pflug 7 und der Pflug des dritten Räumfahrzeuges 3 als dritter Pflug 8 bezeichnet werden. Der erste Pflug 6, der zweite Pflug 7, der dritte Pflug 8 und der Pflug des weiteren Räumfahrzeuges, welches in Fahrtrichtung zum ersten Räumfahrzeug 1 nach links versetzt fährt, sind alle nach links schräg gestellt, sodass sich der geräumte Schnee in Fahrtrichtung nach links über den Rand der Start- und Landebahn 4 hinaus verschiebt. Die weiteren Räumfahrzeuge, welche in Fahrtrichtung zum ersten Räumfahrzeug 1 nach rechts versetzt fahren, weisen einen nach rechts schräg gestellten Pflug auf, sodass sich der geräumte Schnee in Fahrtrichtung nach rechts über den Rand der Start- und Landebahn 4 hinaus verschiebt.

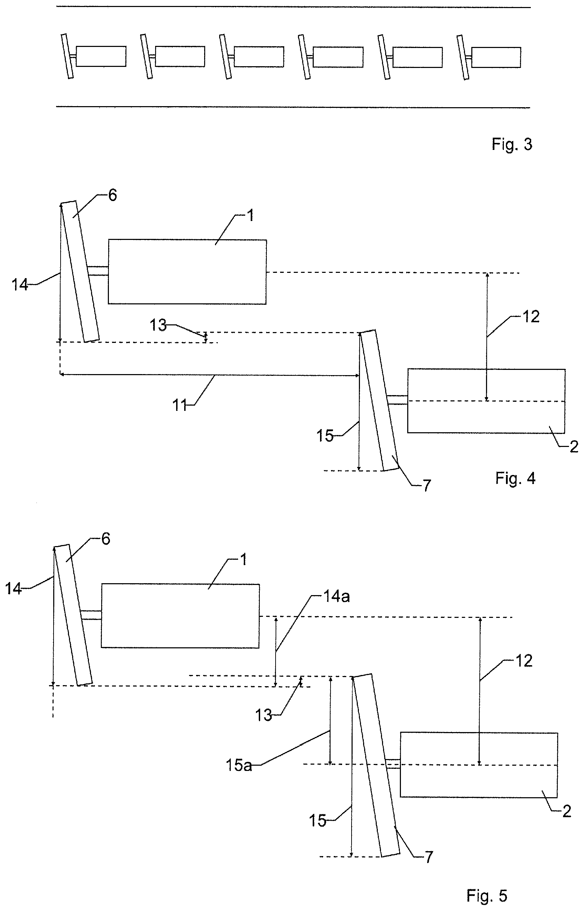

Die Räumfahrzeuge verfügen alle über eine Fahrassistenzvorrichtung und können untereinander kommunizieren. Die Positionsbestimmung der einzelnen Fahrzeuge erfolgt mithilfe von satellitengestützter Navigation, was in der Figur durch den Satelliten 9 angedeutet ist. Dies wird anhand der Fig. 5 weiter erläutert.

Die Räumfahrzeuge fahren zueinander seitlich versetzt und hintereinander. Die seitliche Versetzung ist derart, dass sich die Pflüge der hintereinander fahrenden Räumfahrzeuge teilweise überlappen, damit die Start- und Landebahn 4 sauber geräumt wird. Dies wird anhand der Fig. 4 weiter erläutert.

In Fig. 2 wird ebenfalls eine Fahrzeuggruppe ähnlich zu der in Fig. 1 dargestellten Fahrzeuggruppe gezeigt. Die Fahrzeuggruppe gemäss Fig. 2 weist ein Zusatzfahrzeug 10 auf, welches vorliegend eine Schneefräse ist. Durch den Einsatz des Zusatzfahrzeuges 10 müssen das zweite Räumfahrzeug 2 und das dritte Räumfahrzeug 3 mit einem grösseren Längsabstand zueinander fahren. Dies kann durch die Fahrassistenzvorrichtung ebenfalls berücksichtigt werden.

In Fig. 3 wird eine Fahrzeuggruppe mit insgesamt sechs hintereinanderfahrenden Räumfahrzeugen gezeigt. Die Fahrzeuggruppe fährt im Transfermodus. Das Fahren in diesem Modus ist gewünscht, wenn die Räumfahrzeuge ihre Position auf dem Flughafen verschieben, ohne dass die überfahrene Bodenfläche geräumt werden soll. Beispielsweise transferiert die Fahrzeuggruppe von ihrer Parkposition zum Beginn der Start- und Landebahn 4. Im Transfermodus fahren die einzelnen Räumfahrzeuge dicht hintereinander und nicht seitlich versetzt. Sobald die Fahrzeuggruppe den Beginn der Start- und Landebahn 4 erreicht hat, wechseln die Räumfahrzeuge vom Transfermodus in den Räummodus und stellen sich zueinander seitlich versetzt auf der Start- und Landebahn 4 auf, um wie in Fig. 1 dargestellt die Start- und Landebahn 4 zu räumen.

In Fig. 4 sind das erste Räumfahrzeug 1 mit dem ersten Pflug 6 und das zweite Räumfahrzeug 2 mit dem zweiten Pflug 7 dargestellt. Das erste Räumfahrzeug 1 und das zweite Räumfahrzeug fahren hintereinander mit einem Längsabstand 11 und zueinander seitlich versetzt mit einem Seitenabstand 12.

Im Weiteren fahren das erste Räumfahrzeug 1 und das zweite Räumfahrzeug 2 derart, dass eine seitliche Überlappung 13 zwischen dem ersten Pflug 6 und dem zweiten Pflug 7 vorhanden ist. Dadurch wird der Bodenbereich der Überlappung 13 sowohl vom ersten Pflug 6 als auch vom zweiten Pflug 7 überfahren und geräumt. Der erste Pflug 6 weist eine erste Pflugbreite 14 und der zweite Pflug 7 weist eine zweite Pflugbreite 15 auf. Vorliegend sind die erste Pflugbreite 14 und die zweite Pflugbreite 15 gleich gross, sodass eine Überlappung entsteht, falls der Seitenabstand 12 kleiner als die erste Pflugbreite 14 oder die zweite Pflugbreite 15 ist. Ist der Seitenabstand beispielsweise um 40 cm kleiner als die erste Pflugbreite 14 oder als die zweite Pflugbreite 15 so beträgt die Überlappung 40 cm.

Die Pflugbreite 14, 15 entspricht derjenigen Breite, welche mit dem Pflug 6, 7 tatsächlich geräumt wird. In Fig. 4 sind die Pflüge 6, 7 schräg gestellt, d.h. der Pflug steht nicht exakt im rechten Winkel zur Fahrtrichtung. Je schräger der Pflug gestellt ist, desto kleiner ist die Pflugbreite 14, 15.

In Fig. 5 weisen das erste Räumfahrzeug 1 und das zweite Räumfahrzeug 2 unterschiedliche Pflugbreiten auf. Die erste Pflugbreite 14 ist kleiner als die zweite Pflugbreite 15. In diesem Fall entsteht eine positive Überlappung 14, falls der Seitenabstand 12 kleiner als die Summe der Hälfte 14a der ersten Pflugbreite 14 und der Hälfte 15a der zweiten Pflugbreite 15 ist.

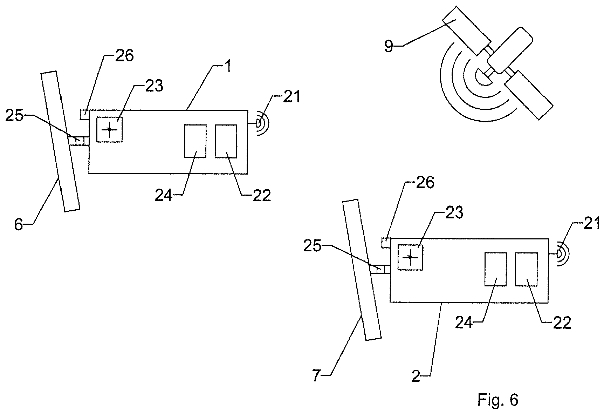

In Fig. 6 wird schematisch die Fahrassistenzvorrichtung der Räumfahrzeuge dargestellt. Sowohl das erste Räumfahrzeug 1, als auch das zweite Räumfahrzeug 2 umfassen eine Positionsmessvorrichtung 21. Es ist eine Real Time Kinematic Messvorrichtung. Dabei handelt es sich um eine Vorrichtung zum präzisen Bestimmen von Positionskoordination mit Methoden der Satellitennavigation. Es können Genauigkeiten von 1 bis 2 cm erreicht werden durch den Empfang von Signalen von mehreren Satelliten, zum Beispiel GPS-Satelliten. Diese Technologie ist dem Fachmann bekannt.

In der Positionsmessvorrichtung 21 werden die verschiedenen Signale empfangen, die Positionskoordination des Räumfahrzeuges in Echtzeit berechnet und an die Steuerung 24 weitergeleitet. Im Weiteren weisen die Räumfahrzeuge eine Kommunikationsvorrichtung 22 auf, womit die Fahrzeuge untereinander kommunizieren können. Mittels der Kommunikationsvorrichtung 22 tauschen die Räumfahrzeuge derselben Fahrzeuggruppe die Positionskoordination aus. Das zweite Räumfahrzeug 2 verfügt somit über die präzisen Positionskoordination sowohl des ersten Räumfahrzeuges 1, als auch des zweiten Räumfahrzeuges 2. Dadurch kann die Steuerung 24 des zweiten Räumfahrzeuges den Längsabstand und den Seitenabstand zwischen dem ersten Räumfahrzeug 1 und dem zweiten Räumfahrzeug 2 berechnen und somit messen und über ein Ausgabegerät 28 dem Fahrer des zweiten Räumfahrzeuges anzeigen.

Die Kommunikationsvorrichtung 22 dient auch dazu, dass das erste Räumfahrzeug 1 den anderen Räumfahrzeugen mitteilen kann, ob sich die Fahrzeuggruppe im Räumungsmodus oder im Transfermodus befindet.

Zusätzlich sind in der Steuerung 24 Abstandsdaten hinterlegt. Diese definieren einen bestimmten Längs- und einen bestimmten Seitenabstand zwischen den beiden Räumfahrzeugen, d.h. es handelt sich um Soll-Abstandswerte. Die Steuerung 24 berechnet sodann die Abweichungen zwischen den gemessenen und den bestimmten Abständen. Die Abweichungen können dem Fahrer über das Ausgabegerät 23 angezeigt werden. Aufgrund dieser Information kann der Fahrer das Fahrzeug derart steuern, dass zwischen dem ersten Räumfahrzeug 1 und dem zweiten Räumfahrzeug 2 der bestimmte Längsabstand und der bestimmte Seitenabstand eingehalten werden.

Das Ausgabegerät zeigt zum Beispiel ein Kreuz und einen Mittelpunkt an. Steuert der Fahrer das Fahrzeug derart, dass der Mittelpunkt im Kreuz liegt, so fährt er mit den bestimmten Abständen. Liegt der Mittelpunkt nicht mehr im Kreuz, so muss der Fahrer das Fahrzeug entsprechend verschieben bzw. beschleunigen oder verlangsamen oder nach rechts oder links steuern, sodass sich der Mittelpunkt zurück in das Kreuz bewegt.

In einer alternativen Ausführungsform weisen die Räumfahrzeuge eine Fahrregelung auf, sodass die Fahrzeuge automatisch gesteuert werden und ohne Eingreifen des Fahrers im bestimmten Längsabstand und im bestimmten Seitenabstand einander folgen.

Weiter umfasst mindestens das erste Räumfahrzeug einen Liniensensor 25, sodass das erste Räumfahrzeug 1 einer auf der Bodenfläche eingezeichneten Linie folgen kann.

Die Räumfahrzeuge umfassen auch eine Sensorik 26 zur Feststellung der witterungsbedingten Sichtweite. In Abhängigkeit der gemessenen Sichtweite können der bestimmte Seitenabstand und/oder der bestimmte Längsabstand durch die Steuerung 24 oder durch den Fahrer vergrössert oder verkleinert werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Fahrzeuggruppe, umfassend ein erstes Räumfahrzeug (1) und ein zweites Räumfahrzeug (2), wobei das zweite Räumfahrzeug (2) eine Fahrassistenzvorrichtung zum Assistieren eines Fahrzeugführers des zweiten Räumfahrzeuges (2) aufweist,
**dadurch gekennzeichnet, dass** die Fahrassistenzvorrichtung einen Räumungsmodus aufweist, und ausgestaltet ist zum Assistieren, um mit dem zweiten Räumfahrzeug (2) dem ersten Räumfahrzeug (1) mit einem bestimmten Längsabstand (11) zu folgen und um dem ersten Räumfahrzeug (1) im Räumungsmodus mit einem bestimmten Seitenabstand (12) seitlich versetzt zu folgen.

2. Fahrzeuggruppe nach Anspruch 1, wobei der bestimmte Seitenabstand (12) kleiner als eine Pflugbreite (14) des ersten Räumfahrzeuges (1) ist,
insbesondere um weniger als 100 cm, insbesondere um weniger als 60 cm, insbesondere um weniger als 40 cm kleiner als die Pflugbreite (14) des ersten Räumfahrzeuges (1) ist.

3. Fahrzeuggruppe nach Anspruch 1, wobei der bestimmte Seitenabstand (12) kleiner, insbesondere um 100 cm, insbesondere um 60 cm, insbesondere um 40 cm kleiner, als eine Summe aus
- einer Hälfte (14a) einer Pflugbreite (14) eines ersten Pfluges (6) des ersten Räumfahrzeuges (1), und
- einer Hälfte (15b) einer Pflugbreite (15) eines zweiten Pfluges (7) des zweiten Räumfahrzeuges (2), ist.

4. Fahrzeuggruppe nach einem der vorangehenden Ansprüche, wobei die Fahrzeuggruppe eine Positionsmessvorrichtung (21) zur Messung des Längsabstands (11) und des Seitenabstands (12) aufweist.

5. Fahrzeuggruppe nach Anspruch 4, wobei
- das zweite Räumfahrzeug (2) ein Ausgabegerät (23) aufweist, welches dazu ausgestaltet ist, Abweichungen des gemessenen Längsabstands vom bestimmten Längsabstand (11) und Abweichungen des gemessenen Seitenabstands vom bestimmten Seitenabstand (12) auszugeben, insbesondere optisch anzuzeigen und/oder akustisch anzugeben und/oder
- das zweite Räumfahrzeug eine Fahrregelung (24) aufweist, welche ausgestaltet ist, das zweite Räumfahrzeug (2) zu steuern, derart, dass der gemessene Längsabstand mit dem bestimmten Längsabstand (11) und der gemessene Seitenabstand mit dem bestimmten Seitenabstand (12) kontinuierlich innerhalb einer bestimmten Toleranz übereinstimmt .

6. Fahrzeuggruppe nach einem der Ansprüche 4 oder 5, wobei die Positionsmessvorrichtung (21) eine Real Time Kinematic Messvorrichtung ist.

7. Fahrzeuggruppe nach einem der vorangehenden Ansprüche, wobei die Fahrassistenzvorrichtung einen Transfermodus aufweist und ausgestaltet ist, zum Assistieren, um dem ersten Räumfahrzeug (1) im Transfermodus ohne seitliche Versetzung mit einem bestimmten Längsabstand zu folgen.

8. Fahrzeuggruppe nach einem der vorangehenden Ansprüche, wobei die Fahrzeuggruppe eine Kommunikationsvorrichtung (22) aufweist,
- welche derart ausgestaltet ist, dass unter den Räumfahrzeugen direkt miteinander Positionsdaten austauschbar sind, und/oder
- wobei ausgehend von einem Fahrzeug der Fahrzeuggruppe, insbesondere von einem der Räumfahrzeuge, den übrigen Räumfahrzeugen mittels der Kommunikationsvorrichtung (22) ein Beginn und/oder ein Ende des Räummodus und/oder des Transfermodus kommunizierbar ist.

9. Fahrzeuggruppe nach einem der vorangehenden Ansprüche, wobei das erste Räumfahrzeug (1) eine Linienfolgeregelung (25) aufweist, welche derart ausgestaltet ist, dass das erste Räumfahrzeug automatisch einer Linie folgt.

10. Fahrzeuggruppe nach einem der vorangehenden Ansprüche, wobei die Fahrzeuggruppe eine Sensorik (26) zur Feststellung der witterungsbedingten Sichtweite aufweist, und die Fahrassistenzvorrichtung ausgestaltet ist, unter Berücksichtigung der festgestellten witterungsbedingten Sichtweite den Längsabstand (11) und/oder eine Fahrgeschwindigkeit zu bestimmen.

11. Fahrzeuggruppe nach einem der vorangehenden Ansprüche, wobei die Fahrzeuggruppe ein drittes Räumfahrzeug (3) und ggf. weitere Räumfahrzeuge mit einer weiteren Fahrassistenzvorrichtung zum Assistieren eines Fahrzeugführers des dritten Räumfahrzeuges (3) bzw. der Fahrzeugführer der weiteren Räumfahrzeuge umfasst, und die weitere Fahrassistenzvorrichtung des dritten Räumfahrzeuges (1) bzw. der weiteren Räumfahrzeuge einen Räumungsmodus aufweist, und ausgestaltet ist zum Assistieren, um mit dem dritten Räumfahrzeug (2) in einem bestimmten Längsabstand (11) und in einem bestimmten Seitenabstand (12) seitlich versetzt dem zweiten Räumfahrzeug (2) zu folgen bzw. um mit den weiteren Räumfahrzeugen dem jeweils vorangehenden Räumfahrzeug in einem bestimmten Längsabstand (11) und in einem bestimmten Seitenabstand (12) seitlich versetzt zu folgen.

12. Verfahren zum Räumen einer befahrbaren Fläche, insbesondere von Roll-, Start- und Landebahnen eines Flughafens von Schnee, mit einer Fahrzeuggruppe, umfassend ein erstes Räumfahrzeug (1) und ein zweites Räumfahrzeug (2), wobei das zweite Räumfahrzeug (2) eine Fahrassistenzvorrichtung zum Assistieren eines Fahrzeugführers des zweiten Räumfahrzeuges (2) aufweist,
**dadurch gekennzeichnet, dass** die Fahrassistenzvorrichtung einen Räumungsmodus aufweist, bei dem die Assistenz für den Fahrzeugführer derart erfolgt, dass das zweite Räumfahrzeug (2) dem ersten Räumfahrzeug (1) mit einem bestimmten Längsabstand (11) und mit einem bestimmten Seitenabstand (12) seitlich versetzt folgt.

13. Verfahren nach Anspruch 12, wobei die Fahrzeuggruppe ein drittes Räumfahrzeug (3) und ggf. weitere Räumfahrzeuge mit einer weiteren Fahrassistenzvorrichtung zum Assistieren eines Fahrzeugführers des dritten Räumfahrzeuges (3) bzw. der Fahrzeugführer der weiteren Räumfahrzeuge umfasst, und die weitere Fahrassistenzvorrichtung des dritten Räumfahrzeuges (1) bzw. der weiteren Räumfahrzeuge ebenfalls einen Räumungsmodus aufweist, bei dem die Assistenz für den Fahrzeugführer derart erfolgt, dass das dritte Räumfahrzeug (2) in einem bestimmten Längsabstand (11) und in einem bestimmten Seitenabstand (12) seitlich versetzt dem zweiten Räumfahrzeug (2) folgt bzw. dass die weiteren Räumfahrzeuge dem jeweils vorangehenden Räumfahrzeug in einem bestimmten Längsabstand (11) und in einem bestimmten Seitenabstand (12) seitlich versetzt folgen.

14. Verfahren nach Anspruch 12 oder 13, wobei
- das zweite Räumfahrzeug (2) und ggf. die weiteren Räumfahrzeuge jeweils ein Ausgabegerät (23) aufweist, mit dem Abweichungen des gemessenen Längsabstands vom bestimmten Längsabstand (11) und Abweichungen des gemessenen Seitenabstands vom bestimmten Seitenabstand (12) an den jeweiligen Fahrzeugführer ausgegeben werden, insbesondere optisch angezeigt und/oder akustisch angegeben werden und/oder wobei
- das zweite Räumfahrzeug eine Fahrregelung (24) aufweist, welche das zweite Räumfahrzeug (2) und ggf. die weiteren Räumfahrzeuge steuert, derart, dass der gemessene Längsabstand mit dem bestimmten Längsabstand (11) und der gemessene Seitenabstand mit dem bestimmten Seitenabstand (12) kontinuierlich innerhalb einer bestimmten Toleranz eingehalten wird.
